# EUROPÄISCHE PATENTANMELDUNG

(11) **EP 0 986 227 A2**
(43) Veröffentlichungstag der Anmeldung: **15.03.2000**
(21) Anmeldenummer: 99110743.4
(22) Anmeldetag: 04.06.1999
(51) Int. Cl.: H04L 29/06

(54) **Verfahren zum Übertragen von an die Leistungsfähigkeit einer Endeinrichtung angepassten Informationen über ein Kommunikationsnetz**

(30) Priorität: 11.07.1998 DE 19831169
(71) Anmelder: Deutsche Telekom AG, 53113 Bonn (DE)
(72) Erfinder: Hertzel, Silvio, 53639 Königswinter (DE); Wagner, Robert, 53343 Wachtberg (DE); Perini, Roland, 53424 Remagen (DE)

(57) **Zusammenfassung**

Die vorliegende Erfindung stellt ein Verfahren bereit, mit dem es möglich ist, verschiedene Informationen von einer einzigen, im Netz (45) implementierten informationsgebenden Einrichtung (40) zu mehreren Endeinrichtungen (10, 20, 30) mit jeweils einem unterschiedlichen Wiedergabeformat zu übertragen. Dazu wird vor oder während eines Verbindungsaufbaus zwischen einer vorbestimmten Endeinrichtung (19, 20, 30) und einer informationsgebenden Einrichtung (40) die individuelle Kennung der vorbestimmten Endeinrichtung (10, 20, 30) zur informationsgebenden Einrichtung (40) oder zu einer mit der informationsgebenden Einrichtung verbindbaren zentralen Einrichtung (50) übertragen.
In Abhängigkeit von der empfangenen individuellen Kennung der Endeinrichtung (10, 20, 30) wird die zu übertragende Information an die Leistungsfähigkeit der Endeinrichtung (10, 20, 30) angepaßt.
Die informationsgebende Einrichtung (40) überträgt anschließend die an die Leistungsfähigkeit der Endeinrichtung angepaßte Information über das Kommunikationsnetz (45) zur Endeinrichtung (10, 20, 30).

## Beschreibung

Die Erfindung beruht auf einem Verfahren zur Übertragung von an die Leistungsfähigkeit einer Endeinrichtung angepassten Informationen über ein Kommunikationsnetz gemäß Anspruch 1, wobei das Kommunikationsnetz wenigstens eine informationsgebende Einrichtung und wenigstens eine an das Netz angeschaltete Endeinrichtung aufweist.

Die Nachrichtentechnik, und dabei insbesondere die Informations- und Telekommunikationstechnik sind in jüngster Zeit einem rasanten Wachstumsprozeß ausgesetzt. Schlagworte wie Multimedia, ISDN, multifunktionale Endgeräte prägen dabei immer mehr unseren Sprachgebrauch. Mit den heutigen Endgeräten wie z. B. Faxgeräte Bildtelefon und dgl. können einem Benutzer die unterschiedlichsten Dienstleistungen, wie zum Beispiel Sprache, Text, Daten und Bildinformationen an seinem Arbeitsplatz verfügbar gemacht werden. Bisher ist es lediglich möglich, Endgeräte gleicher Art, zum Beispiel Fax-Geräte, miteinander kommunizieren zu lassen. Es besteht daher ein Bedürfnis beim Benutzer, eine gewünschte Information unabhängig von Art des die Information aussendenden Geräts in einem beliebigen, wählbaren Format an seinem Arbeitsplatz dargestellt zu bekommen.

Der Erfindung liegt daher die Aufgabe zugrunde, ein Verfahren zur Übertragung von Informationen über ein Kommunikationsnetz bereitzustellen, über das ein Benutzer in einfacher Weise beliebige Informationen in einem beliebigen Format anfordern kann.

Der Kerngedanke der Erfindung ist darin zu sehen, in einem Kommunikationsnetz wenigstens eine informationsgebende Einrichtung vorzusehen, in der zahlreiche unterschiedliche Informationen abgelegt werden können, die ohne Rücksicht auf die Art einer an das Netz angeschalteten Endeinrichtung dorthin übertragen und ausgegeben werden können.

Dieses technische Problem löst die Erfindung durch die Verfahrensschritte des Anspruchs 1.

Damit ein beliebiges Endgerät eine Information von der informationsgebenden Einrichtung empfangen und verarbeiten kann, wird vor oder während eines Verbindungsaufbaus zwischen einer vorbestimmten Endeinrichtung und einer informationsgebenden Einrichtung die individuelle Kennung der vorbestimmten Endeinrichtung zur informationsgebenden Einrichtung oder zu einer mit der informationsgebenden Einrichtung verbindbaren zentralen Einrichtung, in der ein oder mehrere Leistungsmerkmale jeder angeschalteten Endeinrichtung gespeichert sind, übertragen. In der gesamten Beschreibung sowie in den Patentansprüchen versteht man unter dem Begriff "individuelle Kennung" einen Code, der die entsprechende Leistungsfähigkeit der dazu gehörenden Endeinrichtung, den Gerätetyp und/oder den Hardware- und Softwarestand enthält. Insbesondere wird durch die individuelle Kennung das Format (z. B. das Bildformat, Textformat, Daten- oder Sprachformat, Empfangskapazität der Endeinrichtung) festgelegt, welches von der Endeinrichtung verarbeitet werden kann.

In Abhängigkeit von der empfangenden individuellen Kennung der Endeinrichtung wird die zu übertragende Information in der informationsgebenden Einrichtung an die Leistungsfähigkeit der Endeinrichtung angepaßt.
Anschließend überträgt die informationsgebende Einrichtung die an die Leistungsfähigkeit der Endeinrichtung angepaßte Information über das Kommunikationsnetz zur Endeinrichtung.

Neben dem Ausgabeformat der jeweiligen Endeinrichtung enthält die individuelle Kennung, beispielsweise die Angabe über die Speicherkapazität, über die maximale Empfangsrate und dergleichen.

Vorteilhafte Weiterbildungen sind in den Unteransprüchen umschrieben. Um das Verfahren weitestgehend zu automatisieren, überträgt die vorbestimmte Endeinrichtung während eines Verbindungsaufbaus ihre individuelle Kennung automatisch. Alternativ kann die individuelle Kennung der Endeinrichtung auch während eines Verbindungsaufbaus von der informationsgebenden Einrichtung oder der zentralen Einrichtung abgefragt werden. An dieser Stelle sei bereits erwähnt, daß es sich bei der zentralen Einrichtung beispielsweise um einen sogenannten Call-Center handeln kann. In dem Call-Center ist beispielsweise eine Tabelle abgelegt, die zu jeder individuellen Kennung einer an das Kommunikationsnetz angeschalteten Endeinrichtung die zu dieser Endeinrichtung gehörenden Leistungsmerkmale enthält.
Somit ist es möglich, daß bei Empfang einer individuellen Kennung in der zentralen Einrichtung zunächst die dazugehörenden Leistungsmerkmale der entsprechenden Endeinrichtung ausgelesen und anschließen und an die informationsgebende Einrichtung über das Kommunikationsnetz weitergeleitet werden können.

Anstatt eine Verbindung direkt über eine vorbestimmte Endeinrichtung, wie zum Beispiel ein Telefon, zur informationsgebenden Einrichtung oder zur zentralen Einrichtung aufzubauen, ist es möglich, zunächst über eine separate Endeinrichtung eine Verbindung zur informationsgebenden Einrichtung oder zur zentralen Einrichtung aufzubauen und die individuelle Kennung einer vorbestimmten, eine angeforderte Information empfangende Endeinrichtung, deren Rufnummer oder Adresse sowie die gewünschte Information einzugeben. Aufgrund der eingegeben Daten baut die informationsgebende Einrichtung automatisch zu der vorbestimmten Endeinrichtung eine Verbindung auf und überträgt die gewünschte Information in dem entsprechenden Format. Dadurch ist gewährleistet, daß ein Benutzer vor der eigentlichen Informationsübertragung gezielt die Empfangs-Endeinrichtungen auswählen kann, zu denen eine gewünschte Information übertragen werden soll.

Damit die vorbestimmte Endeinrichtung die empfangene Information verarbeiten kann, ist in der informationsgebenden Einrichtung ein Konvertierungsprogramm implementiert, das in Abhängigkeit der empfangenen individuellen Kennung die zu übertragende Information in ein von der entsprechenden Endeinrichtung verarbeitbares Format automatisch umsetzt.
Alternativ ist es denkbar, die zu übertragende Information in der informationsgebenden Endeinrichtung bereits vorab in mehreren verschiedenen Formaten abzulegen, wobei das Format der zu übertragenden Information in Abhängigkeit von der empfangenen, individuellen Kennung der vorbestimmten Endeinrichtung ausgewählt wird.

Bei der informationsgebenden Einrichtung kann es sich um eine Datenbank handeln, die über das Kommunikationsnetz mit mehreren Nachrichtenquellen verbunden werden kann.
Die informationsgebende Einrichtung kann derart implementiert sein, daß sie jeweils nur im Bedarfsfall die entsprechende Information von der jeweiligen Nachrichtenquelle abfragt oder aber zyklisch von den Nachrichtenquellen aktualisiert wird, wie dies beispielsweise beim Wetterdienst, bei Aktienkursen und dergleichen sinnvoll ist. Dadurch kann der zur Verfügung gestellte Speicherplatz in der informationsgebenden Einrichtung reduziert werden.

Der Vorteil dieses Verfahrens ist darin zu sehen, daß ein Benutzer lediglich eine Verbindung zur informationsgebenden Einrichtung aufbauen muß, um eine beliebige Information abfragen zu können. Die informationsgebende Einrichtung sorgt automatisch dafür, daß die verschiedenen Informationen für einen Benutzer bereitgestellt und in einem Format zur vorbestimmten Endeinrichtung übertragen werden, das dieses Format verarbeiten kann.

Gemäß einer besonderen Ausführungsform handelt es sich bei der informationsgebenden Einrichtung um wenigstens ein elektronisches, gegen unberechtigten Zugriff gesichertes Notizbuch, Telefonbuch und/oder einen elektronischen, gegen unberechtigten Zugriff gesicherten Terminplaner. Persönliche Eingaben in das Notizbuch, das Telefonbuch und/oder den Terminplaner können vom Benutzer beispielsweise mittels Spracheingabe an einem Telefon oder mittels über die Tastatur einer Endeinrichtung erzeugter DTMF-Signale vorgenommen werden.

Handelt es sich bei dem Kommunikationsnetz um ein digitales Telekommunikationssnetz, werden die Informationen, individuellen Kennungen und Steuersignale über den Steuerkanal des digitalen Kommunikationsnetzes übertragen.

Auf diese Weise ist es möglich, Informationen mit kleiner Datenmenge unabhängig von der Belegung der Nutzkanäle des Kommunikationsnetzes zu übertragen.

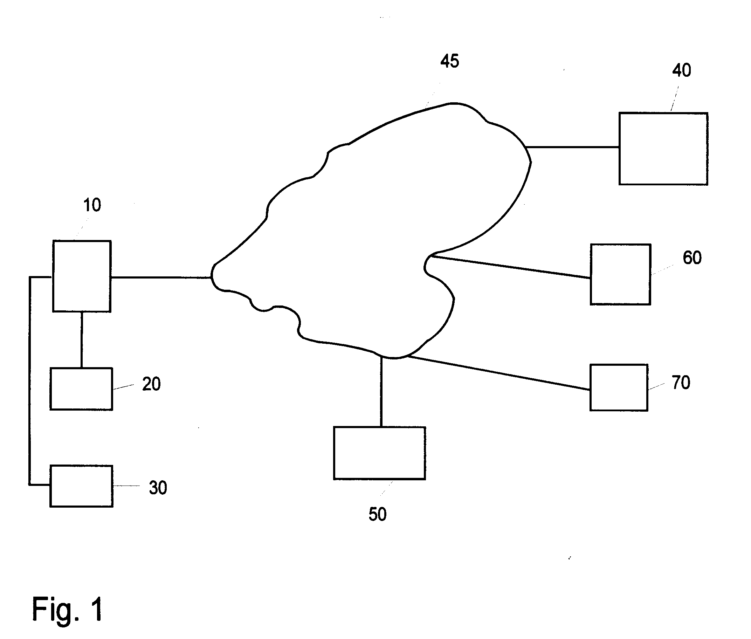

Die Erfindung wird nachfolgend anhand der Ausführungsbeispiele in Verbindung mit der beiliegenden Zeichnung näher erläutert.

In der Figur ist ein bei einem Benutzer aufgestellter, mit 10 bezeichneter Personal-Computer dargestellt. Der Personal Computer 10 ist beispielsweise über eine ISDN-Karte und den Teilnehmeranschluß des Benutzers an ein ISDN-Telekommunikationsnetz 45 angeschaltet ist. Ferner sind beim Kunden ein Fax-Gerät 20 sowie ein Drucker 30 installiert, die in unserem Beispiel mit dem Personal-Computer 10 verbunden sind. Es ist auch denkbar, die Endgeräte 10, 20 und 30 getrennt an einen ISDN-Basisanschluß anzuschalten, so daß zwei Endgeräte gleichzeitig über die beiden B-Kanäle des ISDN-Netzes 45 kommunizieren können. Das ISDN-Kommunikationsnetz 45 enthält wenigstens eine informationsgebende Einrichtung 40, nachfolgend Informations-Datenbank genannt, die mit mehreren verschiedenen Nachrichtenquellen 60, 70 verbindbar ist.
Beispielsweise enthält die Nachrichtenquelle 60 den aktuellen Wetterbericht für Deutschland. Darüber hinaus ist die Informations-Datenbank 40 mit einer zentralen Einrichtung 50 verbindbar, deren Funktion weiter unten noch ausführlich erläutert wird.

Nachfolgend wird die Arbeitsweise der in der Figur dargestellten Kommunikationsanlage näher erläutert. Zunächst sei angenommen, daß ein Kunde beispielsweise eine Information über die aktuelle Wetterlage in Bonn wünscht. Diese Information möchte er sich einmal auf dem Monitor seines Personal-Computers 10 in Form eines Bewegtbildes ansehen und zum anderen über das Fax-Gerät 20 als Faxausdruck und über den Drucker 30 als grafische Darstellung ausgeben lassen. Es sei ferner angenommen, daß der Personal-Computer 10 in bekannter Weise mit einer Kommunikations-Software ausgestattet ist, die automatisch einen Verbindungsaufbau über das Kommunikationsnetz 45 zur Informations-Datenbank 40 oder zur zentralen Einrichtung 50 abwickeln kann. Der Benutzer gibt hierzu über eine, dem Personal-Computer 10 zugeordnete Tastatur jeweils die individuelle Kennung des Personal-Computers 10, des Fax-Gerätes 20 sowie des Druckers 30 ein. Die individuellen Kennungen enthalten das Ausgabeformat des Personal Computers 10, des Fax-Gerätes 20 bzw. des Druckers 30. Darüber hinaus gibt der Benutzer die Rufnummer oder Adresse der drei ausgewählten Endeinrichtungen 10, 20, und 30 sowie die gewünschte Informationsart, das ist im vorliegenden Beispiel die Information über die aktuelle Wetterlage von Bonn ein.

Gleichzeitig gibt der Kunde die Rufnummer oder Adresse der zentralen Einrichtung 50 ein, die mit der Informations-Datenbank 40 verbunden ist. Die zentrale Einrichtung 50 enthält eine Tabelle, in der die individuelle Kennung jeder an das Kommunikationsnetz 45 angeschalteten Endeinrichtung sowie die dazugehörenden Leistungsmerkmale abgelegt sind.
Das Kommunikationsprotokoll des Personal-computers 10 baut nunmehr automatisch über den D-Kanal des ISDN-Kommunikationsnetz 45 eine Verbindung zur zentralen Einrichtung 50 auf und überträgt die individuellen Kennungen der angeschalteten Endeinrichtungen 10, 20 und 30, die dazugehörenden Rufnummern oder Adressen sowie die gewünschte Informationsart zur zentralen Einrichtung 50. Die zentrale Einrichtung 50 identifiziert die empfangenen individuellen Kennungen der Endeinrichtungen 10, 20 bzw. 30 und überträgt die zu den jeweiligen Kennungen gehörenden Leistungsmerkmale zusammen mit der gewünschten Informationsart und den entsprechenden Rufnummern oder Adressen der Endeinrichtungen 10, 20 und 30 zur Informations-Datenbank 40.

Die Informations-Datenbank 40 enthält eine Einrichtung zum Erfassen und Auswerten der gewünschten Informationsart.
Da der Kunde eine Information über die aktuelle Wetterlage von Bonn wünscht, baut die Informations-Datenbank 40 automatisch eine Verbindung zur Nachrichtenquelle 60 auf, die die aktuelle Wetterlage für Deutschland speichert. Die Informationsquelle 60 überträgt anschließend lediglich die Information über die Wetterlage von Bonn zur Informations-Datenbank 40.

Die Informations-Datenbank 40 umfaßt ferner ein Konvertierungsprogramm, mit dessen Hilfe die zu übertragende Information über die aktuelle Wetterlage an die Leistungsfähigkeit der angeschalteten Endeinrichtungen 10, 20 und 30 umgesetzt wird. Mit anderen Worten setzt die Informations-Datenbank 40 die Information über die aktualisierte Wetterlage von Bonn jeweils in ein Format um, das vom Personal-Computer 10, vom Fax-Gerät 20 bzw. vom Drucker 30 verarbeitet und ausgegeben werden kann.
Anschließend baut die Informations-Datenbank 40 mit Hilfe der erhaltenen Rufnummern oder Adressen über den Steuerkanal eine Verbindung zu den drei Endeinrichtungen 10, 20 und 30 auf und überträgt die Information über die Wetterlage von Bonn in den an die Endeinrichtungen 10, 20 und 30 angepaßten Formaten zum Kunden. Dem Kunden wird die gewünschte Information über die aktuelle Wetterlage somit in Form eines bewegten Bildes auf dem Monitor seines Personal-Computers 10, in Textform auf einer gefaxten Seite bzw. in gedruckter Bildform auf einer durch den Drucker 30 ausgedruckten Seite angeboten.

Gemäß einer weiteren Ausführungsform kann der Verbindungsaufbau zwischen der Informations-Datenbank 40 und den Endeinrichtungen 10,20 und 30 auch von der zentralen Einrichtung 50 gesteuert werden.

Ein alternatives Szenario umfaßt lediglich den Personal-Computer 10 beim Kunden, das digitale ISDN-Kommunikationsnetz 45 und die Informations-Datenbank 40, in der alle zur Verfügung stehenden Informationen abgelegt sind. Die zentrale Einrichtung 50 sowie die Nachrichtenquellen 60 und 70 werden nicht benötigt. Wiederum möchte der Kunde die Information über die aktuelle Wetterlage in Bonn erhalten. Dazu gibt er an seinem Personal-Computer 10 die Rufnummer oder Adresse der Informations-Datenbank 40 sowie den Code für die gewünschte Informationsart "Wetterlage von Bonn" ein. Der Personal-Computer 10 baut wiederum über sein Kommunikationsprotokoll eine Verbindung über den Steuerkanal des digitalen Kommunikationsnetzes zur Informations-Datenbank 40 auf und überträgt sowohl den Code für die gewünschte Informationsart als auch automatisch seine individuelle Kennung. Die individuelle Kennung des Personal-Computers 10 umfaßt beispielsweise die Größe des freien Arbeitsspeichers als auch das Ausgabemedium, in diesem Fall den Monitor.

Ferner sei diesmal angenommen, daß die in der Informations-Datenbank 40 abgelegten Informationen in mehreren verschiedenen, den indiviuellen Kennungen entsprechenden Formaten abgelegt sind. Die Informations-Datenbank 40 ist derart ausgebildet, daß sie die empfangene individuelle Kennung sowie den Code für die gewünschte Informationsart auswerten kann. In Abhängigkeit der individuellen Kennung des Personal-Computers 10 und der gewünschten Information über die Wetterlage wird die zu übertragende Information in dem für den Personal-Computer 10 geeigneten Format ausgelesen und zu diesem übertragen. Die Information über die Wetterlage wird anschließend auf dem Monitor des Personal-Computers 10 dargestellt. Beispielsweise wird die Information über die Wetterlage in Form einer farbigen Karte oder einer Animation auf dem Monitor des Personal-Computer 10 wiedergegeben.

Obwohl in unserem Beispiel als Endeinrichtung ein Personal-Computer 10, ein Fax-Gerät 20 oder ein Drucker 30 genutzt wird, ist es auch denkbar, ein mit dem Short-Message-Service ausgerüstetes Funktelefon, ein Telefon nach dem DECT-Standard und beliebige andere Endeinrichtungen einzusetzen.
Die Informations-Datenbank 40 ist daher derart ausgebildet, daß sie die zu übertragenden Informationen immer in das von der jeweiligen Endeinrichtung verarbeitbare Format umzusetzen oder das entsprechende Format auswählen kann.

Wie bereits erwähnt, kann die Informations-Datenbank 40 sämtliche zu übertragenden Informationen enthalten oder aber wie in der Figur dargestellt, mit mehreren Nachrichtenquellen im Bedarfsfall verbunden werden.

Gemäß einer besonderen Weiterbildung kann es sich bei der Informations-Datenbank 40 um mehrere persönliche, elektronische Telefonbücher, Notizbücher oder Terminplaner handeln. Einträge in das persönliche Telefonbuch, das persönliche Notizbuch oder den persönlichen Terminplaner können mittels Sprache über ein Telefon, in Verbindung mit DTMF-Signalen über eine Tastatur oder von einer zentralen Stelle, beispielsweise einem Operator in einem Call-Center eingegeben werden. Je nach Kundenwunsch werden die angeforderten Informationen in einem Sprachformat, Bildformat, Datenformat oder Textformat an die ausgewählte Endeinrichtung zur Wiedergabe übertragen. Da die zu übertragenden Datenmengen relativ gering sind, ist es möglich, zur Übertragung der Information den Steuerkanal des digitalen Kommunikationsnetzes zu benutzen. Damit die Daten im persönlichen Telefonbuch, im persönlichen Terminplaner und im persönlichen Notizbuch gegen einen unberechtigten Zugriff geschützt sind, wird beispielsweise eine PIN-Nummer an jeden Benutzer vergeben. Der Benutzer erhält den Zugriff zu seinem persönlichen Telefonbuch, zu seinem persönlichen Notizbuch bzw. zu seinem persönlichen Termin-planer, indem er beispielsweise an seinem Personal-Computer 10 die Rufnummer oder Adresse der die persönlichen Telefonbücher enthaltenen Informations-Datenbank 40 wählt und seine PIN-Nummer eingibt. Ein Vorteil des netzgebundenen persönlichen Telefonbuches, des netzgebundenen persönlichen Notizbuches und des netzgebundenen persönlichen Terminplaners ist darin zu sehen, daß der Benutzer von jedem Netzanschluß aus Zugang zu seinem persönlichen Telefonbuch, zu seinem persönlichen Notizbuch und/oder zu seinem persönlichen Terminplaner besitzt.

## Patentansprüche

1. Verfahren zur Übertragung von an die Leistungsfähigkeit einer Endeinrichtung angepassten Informationen über ein Kommunikationsnetz (45), das wenigstens eine informationsgebende Einrichtung (40) und wenigstens eine daran angeschaltete Endeinrichtung (10, 20, 30) aufweist,
mit folgenden Verfahrenschritten:
a) vor oder während eines Verbindungsaufbaus zwischen wenigstens einer vorbestimmten Endeinrichtung (10, 20, 30) und der informationsgebenden Einrichtung (40) wird die individuelle Kennung der vorbestimmten Endeinrichtung zur informationsgebenden Einrichtung oder zu einer mit der informationsgebenden Einrichtung verbindbaren zentralen Einrichtung (50), in der ein oder mehrere Leistungsmerkmale jeder angeschalteten Endeinrichtung gespeichert sind, übertragen;
b) in Abhängigkeit von der empfangenen individuellen Kennung der Endeinrichtung (10, 20, 30) wird die zu übertragende Information an die Leistungsfähigkeit der Endeinrichtung angepaßt;
c) die informationsgebende Einrichtung (40) überträgt die an die Leistungsfähigkeit der Endeinrichtung (10, 20, 30) angepaßte Information über das Kommunikationsnetz (45) zur Endeinrichtung.

2. Verfahren nach Anspruch 1,
dadurch gekennzeichnet, daß
in Schritt a) die Endeinrichtung (10, 20, 30) automatisch während eines Verbindungsaufbau ihre individuelle Kennung überträgt oder daß
die individuelle Kennung der Endeinrichtung während eines Verbindungsaufbaus von der informationsgebenden Einrichtung (40) oder der zentralen Einrichtung (50) abgefragt wird.

3. Verfahren nach Anspruch 1 oder 2,
dadurch gekennzeichnet, daß
in Schritt a) die individuelle Kennung der vorbestimmten Endeinrichtung (10, 20, 30), deren Rufnummer oder Adresse sowie die gewünschte Information von einem Benutzer über eine separate Endeinrichtung eingegeben und zur informationsgebenden Einrichtung (40) oder zur mit der informationsgebenden Einrichtung verbundenen zentralen Einrichtung (50) übertragen werden.

4. Verfahren nach einem der Ansprüche 1 bis 3,
dadurch gekennzeichnet, daß
die informationsgebende Einrichtung (40) in Abhängigkeit der empfangenen individuellen Kennung die zu übertragende Information in ein von der entsprechenden Endeinrichtung verarbeitbares Format umsetzt.

5. Verfahren nach einem der Ansprüche 1 bis 3,
dadurch gekennzeichnet, daß
- die zu übertragende Informationen in der informationsgebenden Einrichtung (40) in mehreren verschiedenen Formaten abgelegt werden und daß
- das Format der zu übertragenden Information in Abhängigkeit von der empfangenen, individuellen Kennung der vorbestimmten Endeinrichtung (10, 20, 30) ausgewählt wird.

6. Verfahren nach einem der Ansprüche 1 bis 5,
dadurch gekennzeichnet, daß
als informationsgebende Einrichtung (40) im Kommunikationsnetz wenigstens ein elektronisches, gegen unberechtigten Zugriff gesichertes Notizbuch, Telefonbuch und/oder ein elektronischer, gegen unberechtigten Zugriff gesicherter Terminplaner verwendet wird, wobei
Einträge in das Notizbuch, Telefonbuch und/oder den Terminplaner vom Benutzer mittels Spracheingabe an einem Telefon, mittels über die Tastatur einer Endeinrichtung erzeugter DTMF-Signale oder über eine Datenendeinrichtung vorgenommen werden.

7. Verfahren nach einem der Ansprüche 1 bis 6,
dadurch gekennzeichnet, daß der Steuerkanal eines digitalen Kommunikationsnetz zur Übertragung der Informationen, individuellen Kennungen und Steuersignale verwendet wird.
